# EUROPÄISCHE PATENTSCHRIFT

(11) **EP 3 429 776 B1**
(45) Veröffentlichungstag und Bekanntmachung des Hinweises auf die Patenterteilung: **26.02.2020**
(21) Anmeldenummer: 17711129.1
(22) Anmeldetag: 14.03.2017
(51) Int. Cl.: B21J 9/02, B21J 15/12, B23Q 5/32, H02K 7/06

(54) **VORRICHTUNG ZUR BEAUFSCHLAGUNG EINES VERBINDUNGSELEMENTS MIT EINER BEAUFSCHLAGUNGSKRAFT**
DEVICE FOR APPLYING A PRESSURE FORCE ON A FASTENER
MACHINE POUR APPLIQUER UNE FORCE DE PRESSION SUR UN ELEMENT DE FIXATION

(30) Priorität: 18.03.2016 CH 3822016
(43) Veröffentlichungstag der Anmeldung: 23.01.2019
(73) Patentinhaber: Baltec Maschinenbau AG, 8330 Pfäffikon (CH)
(72) Erfinder: HUBER, Klaus, 8123 Ebmatingen (CH)
(74) Vertreter: IPrime Rentsch Kaelin AG
(86) Internationale Anmeldenummer: PCT/EP2017/055970
(87) Internationale Veröffentlichungsnummer: WO 2017/157926

(56) Entgegenhaltungen:
- DE-U1-202013 000 092

## Beschreibung

### Technisches Gebiet

Die Erfindung betrifft eine Vorrichtung zur Beaufschlagung eines Verbindungselements mit einer Beaufschlagungskraft, dergestalt, dass das Verbindungselement durch die Beaufschlagung plastisch verformt wird. Sie betrifft weiter ein Verfahren zum Betreiben einer solchen Vorrichtung, sowie die Verwendung der genannten als elektrische Nietmaschine, alles gemäss den Oberbegriffen der unabhängigen Ansprüche.

### Stand der Technik

Schon seit langem werden zum Verbinden von Bauteilen Verbindungselemente eingesetzt, welche durch eine Verformung einen Formschluss zwischen den zu verbindenden Elementen ermöglichen. Gängigerweise wird dabei das Verbindungselement in eine die zu verbindenden Bauteile im Wesentlichen gänzlich umfassende Wirkverbindung gebracht. Vor der plastischen Verformung ist diese Wirkverbindung lösbar. Die plastische Verformung des Verbindungselements führt dazu, dass eine formschlüssige Verbindung der Bauteile erzeugt wird.

Ein übliches Verfahren welches mit Hilfe einer Beaufschlagung eines Verbindungselementes eine Verbindung schafft, ist das Nieten. Beim Nieten werden Verbindungselemente aus Metallen, Legierungen oder Kunststoffe verwendet, welche nach dem plastischen Verformen nicht wieder in ihre Ausgangsform zurückkehren. Beim Nieten wird der Niet in eine Bohrung, welche sich durch die beiden zu verbindenden Elemente erstreckt, eingeführt. Der Niet wird im Anschluss mechanisch verformt, sodass auf mindestens einer der beiden Seiten in denen der Niet durch einen Überhang hinausragte, eine plastische Verformung stattgefunden hat. In der Regel entsteht so der charakteristische "Pilzkopf" der Niete.

Um einen besonders stabilen Niet zu erhalten, hat es sich bewährt, wenn die Nietmaschine anstelle einer flachen geraden Beaufschlagung eine Kurve beschreibt, welche sich um den Nietkopf kreisend dergestalt bewegt, dass dieser von allen Seiten angeformt wird. Bei einer solchen Radialniettechnik wird mit schonenden Kräften eine gute Nietenoberstruktur ermöglicht.

WO 2005/007319 A1 (Zemp, T.) beschreibt ein solches Verfahren, bei dem ein Verbinden von Bauteilen, welches durch mindestens ein Bauteil durchgreift, über eine Umformmaschine vollzogen wird. Vor dem Vernieten wird zusätzlich ein Überstand ermittelt, welches herangezogen wird, um die Parameter der Beaufschlagung, wie zum Beispiel Umformweg, Umformzeit und Umformkraft, zu bestimmen.

Üblicherweise werden solche Vorrichtungen zur Beaufschlagung von Verbindungselementen in Werkzeugmaschinen untergebracht. Dazu sind die Maschinen vorteilhaft besonders platzsparend unterzubringen. Im Stand der Technik sind zahlreiche Vorrichtungen bekannt, welche hydraulische oder pneumatische Antriebe verwenden, um die erforderliche Beaufschlagungskraft zu erzeugen. Moderne Hydraulik- und/oder Pneumatikantriebe lassen sich in geeigneter kompakter Bauweise herstellen, dass eine Montage in den meisten Werkzeugmaschinen problemlos möglich ist. Ein weithin bekannter Nachteil hydraulischer Maschinenantriebe ist allerdings die Gefahr einer Kontamination des Werkzeugraums mit Hydraulikfluid. Insbesondere in der medizintechnischen Produktion, in Sterilräumen und/oder bei der Präzisionsmechanik, sind solche Kontaminationen besonders unerwünscht.

Die FR 2 660 219 (Roslyj, W. et al) beschreibt eine solche Nietvorrichtung, welche besonders kompakt ist. Die Vorrichtung sieht einen festen Lasterrahmen vor, der einen hydraulisch angetriebenen Stössel behaust, welcher zusätzlich mit einer Rotationsvorrichtung wirkverbunden ist. Die Stossachse endet in einem Stempel zur Beaufschlagung eines verformbaren Materials. Diese Vorrichtung ist allerdings für die Montage in Werkzeugmaschinen mit erhöhter Reinheitsanforderung nicht geeignet.

DE 20 2013 000092 U1 (KMT GmbH) offenbart eine Vorrichtung zur Beaufschlagung eines Verbindungselements gemäß dem Oberbegriff des Anspruchs 1.

Es besteht somit ein Bedarf nach Vorrichtungen der eingangs geschilderten Art, welche kompakt sind und eine Verwendung in einem Werkzeugraum mit erhöhten Reinheitsanforderungen ermöglichen. Insbesondere soll eine Vorrichtung der eingangs geschilderten Art bereitgestellt werden, welche einen geringen Wartungsaufwand aufweist und einfach in eine Werkzeugmaschine integriert werden kann.

Diese Aufgabe wurde mit einer Vorrichtung, einem Verfahren und der entsprechenden Verwendung gemäss kennzeichnendem Teil der unabhängigen Ansprüche gelöst.

### Darstellung der Erfindung

Ein Aspekt der vorliegenden Erfindung betrifft eine Vorrichtung zur Beaufschlagung eines Verbindungselements mit einer Beaufschlagungskraft. Diese Beaufschlagungskraft soll dergestalt auf das Verbindungselement einwirken, dass dieses durch die Beaufschlagung plastisch verformt wird. Im Sinne der vorliegenden Erfindung, kann diese plastische Verformung durch weitere Umformprozesse begleitet sein. So kann parallel ein Erhitzen des Verbindungselements stattfinden, das zusätzlich zur formschlüssigen Verbindung, welche durch die plastische Verformung entsteht, eine kraftschlüssige Verbindung zwischen den zu verbindenden Elementen eingegangen wird. In einer besonderen Ausführungsform ist das Verbindungselement ein Verbindungselement aus einem Metall, einer Metalllegierung und/oder einem Kunststoff, das geeignet ist durch eine plastische Verformung eine, nicht ohne wesentlichen Kraftaufwand umzukehrende neue Form einzunehmen. Bevorzugt ist das Verbindungselement so ausgestaltet, dass diese neue Form eine mechanische Arretierung der zu verbindenden Elemente bezüglich einander ermöglicht. Dies kann zum Beispiel in Form eines Niets sein, der zwei Elemente, die zu verbinden sind, mit einem Überhang durchgreift, welcher plastisch verformt ist.

Die erfindungsgemässe Vorrichtung umfasst weiter ein bewegbar gelagertes Kopfteil mit einem Bearbeitungskopf. Der Bearbeitungskopf ist so ausgelegt, dass er das Verbindungselement zu kontaktieren vermag. Im Sinne der vorliegenden Erfindung kann daher bezüglich der Vorrichtung von einem distalen und einem proximalen Ende gesprochen werden. Das distale Ende ist dasjenige, welches in Betrieb den zu beaufschlagenden Verbindungselement am nächsten ist. Das proximale Ende der Vorrichtung ist dasjenige, welches mit einer Werkzeugmaschine eine Wirkverbindung eingehen kann. Besonders bevorzugt ist diese Wirkverbindung eine Übertragung elektrischer Energie und Signale. In diesem Beispiel stellt der Bearbeitungskopf einen Bestandteil des distalen Endes der Vorrichtung dar. Der Bearbeitungskopf ist bevorzugt aus einem Material hergestellt, welches härter ist als das zu beaufschlagende Verbindungselement.

In einer besonderen Ausführungsform ist der Bearbeitungskopf ein Stempel. In einer alternativen Ausführungsform ist der Bearbeitungskopf ein Wälzelement zur rollierenden Umformung. In einer besonders bevorzugten Ausführungsform umfasst das Wälzelement eine Mehrzahl an Wälzkörper ausgewählt aus der Gruppe bestehend aus Rollen, Kegel, Kugeln, Zylinderrollen, Nadelrollen, Kegelrollen und Tonnenrollen zur Beaufschlagung eines zu bearbeitenden Verbindungselements, insbesondere umfasst der zwischen zwei und neun Wälzkörper. Durch einen Wälzkörper als Bearbeitungskopf kann eine spanfreie Umformung eines Verbindungselements erreicht werden. Wahlweise können die Kugeln und/oder Rollen mit Oberflächenstrukturen versehen sein, welche sich auf das zur Verformende Verbindungelement übertragen, so z.B. eine Profilierung, Rillung und/oder Aufrauhung.

In einer besonderen Ausführungsform ist die Vorrichtung modular so ausgestaltet, dass das Kopfteil austauschbar ist. So kann, z.B. ein Kopfteil mit einem als Stempel ausgestalteten Bearbeitungskopf ausgetauscht werden mit einem Kopfteil mit einem als Wälzlager ausgestalteten Kopfteil. Auch der Austausch von Kopfteilen mit der gleichen Art des Bearbeitungskopfes ist selbstverständlich möglich. So kann z.B. das Kaliber des Bearbeitungskopfes ausgetauscht werden, oder ganz einfach ein Kopfteil gleicher Bauart ausgetauscht werden.

In einer besonderen Ausführungsform umfasst das Kopfteil ein Verbindungselement zur wirkverbindenden und reversiblen Aufnahme eines Bearbeitungskopfes, insbesondere eines Stempels oder eines Wälzelements, wie eines Rollierkopfes.

Im Sinne der vorliegenden Erfindung kann ein Kopfteil als bewegbar gelagert angesehen werden, wenn das Kopfteil mitsamt des Bearbeitungskopfes entlang mindestens einer Achse bewegbar ist. Besonders bevorzugt ist im vorliegenden Beispiel das Kopfteil linear entlang der Längsachse der Vorrichtung gelagert, sodass das bewegbare Kopfteil eine Translationsbewegung entlang der Längsachse der Vorrichtung durchführen kann.

Die erfindungsgemässe Vorrichtung umfasst weiter einen ersten Antrieb, der ausgelegt ist eine Translation des Kopfteils in der Längsachse des Kopfteils anzutreiben. Bevorzugt ist der erste Antrieb ausgelegt die besagte Translation dergestalt anzutreiben, dass die Beaufschlagungskraft vom Bearbeitungskopf auf das Verbindungselement beaufschlagt wird. Der erste Antrieb ist bevorzugt ein Linearantrieb. Besonders bevorzugt ist er so angeordnet, dass er dem Kopfteil vorgelagert ist. Das heisst der erste Antrieb ist bevorzugt hinsichtlich des Kopfteils proximal innerhalb der Vorrichtung angeordnet.

Die erfindungsgemässe Vorrichtung umfasst weiter einen zweiten Antrieb, der ausgelegt ist eine Rotation des Bearbeitungskopfes, insbesondere des Stempels, um die Längsachse anzutreiben. Im Sinne der vorliegenden Erfindung kann die Längsachse definiert werden, als die zentrale Rotationsachse der Vorrichtung. Sie entspricht im Wesentlichen der Achse der Beaufschlagung und erstreckt sich längsseitig vom proximalen zum distalen Ende der Vorrichtung. Bevorzugt ist der zweite Antrieb so ausgestaltet, dass der Stempel mindestens eine geschlossene Kurve zu beschreiben vermag.

In einer besonderen Ausführungsform, wobei der Bearbeitungskopf mindestens einen Wälzkörper umfasst, ist der Antrieb so ausgestaltet, das der mindestens eine Wälzkörper um die zentrale Längsachse der Vorrichtung rotierbar ist, insbesondere eine geschlossene Kurve zu beschreiben vermag.

In einer besonderen Ausführungsform, wobei der Bearbeitungskopf mindestens einen Wälzkörper umfasst, umfasst der Bearbeitungskopf ein zweites Getriebe, welches ausgelegt ist die Umdrehungszahl des Antriebs zu reduzieren.

Die erfindungsgemässe Vorrichtung umfasst weiter ein Gehäuse zur Aufnahme des ersten Antriebs, des zweiten Antriebs und des Kopfteils.

In der erfindungsgemässen Vorrichtung sind der erste und der zweite Antrieb elektrisch angetrieben und koaxial angeordnet. Im Sinne der vorliegenden Erfindung kann eine koaxiale Anordnung mit anderen Worten zum Beispiel als mit einer übereinstimmenden Rotationsachse ausgestattet definiert sein.

In einer besonderen Ausführungsform sind keine hydraulischen und/oder pneumatischen Bauteile in der erfindungsgemässen Vorrichtung untergebracht. In einer besonderen Ausführungsform ist das Gehäuse mehrteilig ausgestaltet. Ein erstes Gehäuseteil kann ausgestaltet sein, den ersten Antrieb aufzunehmen, während ein zweites Gehäuseteil ausgestaltet ist, das Kopfteil mitsamt dem zweiten Antrieb aufzunehmen.

Erfindungsgemäß ist der zweite Antrieb im Kopfteil angeordnet. Infolgedessen ist der zweite Antrieb bewegbar gelagert.

In einer besonderen Ausführungsform ist das Gehäuse einstückig ausgebildet.

In einer besonderen Ausführungsform ist das Gehäuse mehrteilig ausgestaltet, insbesondere zweiteilig ausgestaltet.

Ein möglicher Vorteil einer Unterbringung der Antriebe in separaten Gehäuseteilen bei der zweiteiligen Gehäuseteil-Ausführungsform ist die Modularität der erfindungsgemässen Vorrichtung. Je nach Bedarf bezüglich des Rotationsmusters, welcher durch den zweiten Antrieb ermöglicht werden soll, respektive entsprechend der Hubgrössen oder der Beaufschlagungskraft, die durch den ersten Antrieb bereitgestellt werden kann, kann ein Fachmann die für ihn geeignete Anordnung modular zusammenstellen.

Die Antriebe können auch unabhängig von den Gehäuseteilen austauschbar ausgestaltet sein. Im Sinne der vorliegenden Erfindung kann eine Anordnung als koaxial definiert sein, wenn sie mindestens eine übereinstimmende Rotationsachse aufweisen. Im vorliegenden Beispiel ist die Längsachse der Vorrichtung die Rotationsachse des ersten Antriebs und des zweiten Antriebs.

Durch die erfindungsgemässe Vorrichtung ist eine Vorrichtung zur Beaufschlagung eines Verbindungselements mit einer Beaufschlagungskraft bereitgestellt, welches einen vergleichsweise geringen Platzbedarf hat und kompakt und schlank herstellbar ist. Dadurch ist die Integration der Vorrichtung in eine Werkzeugmaschine vereinfacht. Auch der Wartungsaufwand ist reduziert, da sämtliche antriebsrelevanten Elemente innerhalb des Gehäuses untergebracht sind und somit vor Verschmutzung oder Einwirkung geschützt sind.

In einer besonderen Ausführungsform ist das Gehäuse gegen aussen abgedichtet. Dies kann zum Beispiel durch eine Dichtungslippe ermöglicht werden, welche zwischen den beiden zueinander bewegbaren Teilen, also zwischen Kopfteil und Gehäuseinnenwand, ein Eindringen von Schmutz und Staub verhindert.

In einer besonderen Ausführungsform ist der erste Antrieb ein elektrischer Linearantrieb. Durch den Verzicht auf Hydraulikflüssigkeit innerhalb der Vorrichtung kann die Vorrichtung besonders günstig in Reinräumen eingesetzt werden.

In einer besonderen Ausführungsform umfasst der erste Antrieb einen Hohlwellenmotor, besonders bevorzugt einen permanent erregten Hohlwellenmotor. Dieser Hohlraum kann einen Hub einer Gewindespindel aufnehmen, und ermöglicht eine kompaktere Bauform der erfindungsgemässen Vorrichtung.

In einer besonderen Ausführungsform umfasst der erste Antrieb weiter einen Gewindetrieb, ausgewählt aus der Gruppe bestehend aus: Rollentrieb, Kugeltrieb oder Planetenwälzgewindetrieb. Besonders bevorzugt umfasst der erste Antrieb einen Planetenwälzgewindetrieb zum Umsetzen einer Vorschubbewegung des Kopfteils. Dies ermöglicht besonders hohe Kräfte bei gleichzeitig kleiner Ausführung bereitzustellen.

In einer besonderen Ausführungsform umfasst der erste Antrieb eine Gewindespindel, welche eine Spindelsteigung von 5 mm oder weniger aufweist. Dies ermöglicht eine hohe Dynamik, bei gleichzeitig kompakter Bauweise. Auf einem Planetenwälzgewindetrieb können sich Planeten mit parallel angeordneten Rillen abwälzen. Eine Spindelmutter ermöglicht die Rotation der Planeten.

In einer besonderen Ausführungsform umfasst der zweite Antrieb einen permanent erregten Synchronmotor, welcher direkt im Kopfteil untergebracht ist. Bevorzugt ist der zweite Antrieb in Relation zum ersten Antrieb distal angeordnet. Der zweite Antrieb ist insbesondere ausgelegt, eine Wirkverbindung mit dem Bearbeitungskopf, insbesondere dem Stempel, herzustellen, und diesen in eine Rotationsbewegung zu versetzen. Der Synchronmotor umfasst einen Rotor und einen Stator. In einer besonderen Ausführungsform ist die Drehzahl des zweiten Antriebs stufenlos steuerbar.

In einer besonderen Ausführungsform umfasst das Gehäuse eine Mündung, durch welche am distalen Ende des Gehäuses das Kopfteil bewegbar ist. Insbesondere ist das Kopfteil um einen Hub bewegbar. In einer besonderen Ausführungsform entspricht dieser Hub im Wesentlichen der Hohlwelle bezüglich der Ausdehnung in ihrer Längsachse. Der Hub kann bidirektional aufwärts und abwärts in kurzen Zeitabständen steuerbar sein. In einer besonderen Ausführungsform ist der Hub geführt.

In einer besonderen Ausführungsform weist die Mündung eine Dichtungslippe.

In einer besonderen Ausführungsform umfasst die Vorrichtung einen Kraftsensor, welcher die Beaufschlagungskraft misst und dem ersten Antrieb nachgeschaltet ist. In einer besonderen Ausführungsform ist der Kraftsensor dem zweiten Antrieb vorgeschaltet. Durch diese Anordnung kann die Kraft direkt dort gemessen werden, wo sie erzeugt wird. Dadurch kann die lineare Anpresskraft des ersten Antriebs weitgehend am Entstehungsort detektiert werden. Der Kraftsensor kann weiter ausgestaltet sein, eine Rückkopplung, das heisst ein Widerstand des Kopfteils zu detektieren. In einer besonderen Ausführungsform handelt es sich beim Kraftsensor um einen Piezo-Kraftsensor. Alternativ kann auch ein Dehn- oder Torsionszylinder oder eine Feder eingesetzt werden, um die entsprechende Anpresskraft zu messen.

In einer besonderen Ausführungsform umfasst das Gehäuse eine Führung für eine translatorische Bewegung des Kopfteils. Bevorzugt weist das Gehäuse weiter eine Verdrehsicherung bezüglich des Kopfteils auf. Die Verdrehsicherung kann als einstückiges Bauteil vorgesehen sein, welche an der Gehäuseinnenwand angeformt ist. Alternativ kann die Verdrehsicherung ein separates in eine entsprechende Führungsschiene der Gehäuseinnenwand einpassbare Verdrehsicherung sein. Besonders bevorzugt ist die Verdrehsicherung so ausgestaltet, dass eine translatorische Bewegung des Kopfteils innerhalb des Gehäuses geführt ist, eine Rotation des Kopfteils hinsichtlich des Gehäuses aber durch die Verdrehsicherung unterbunden ist.

In einer besonderen Ausführungsform ist die Verdrehsicherung als Keil innerhalb des Gehäuses ausgebildet.

In einer besonderen Ausführungsform umfasst die Vorrichtung Mittel zur indirekten Kraftmessung bezüglich der Antriebe. In einem besonderen Beispiel kann dieser indirekte Kraftmessung über den Motorstrom sichergestellt sein.

In einer besonderen Ausführungsform umfasst die Vorrichtung Führungsstangen, welche sich vom Kopfteil zu einem ersten Gehäuseteil erstrecken und in diesem über eine Führungsnut gelagert sind. Durch diese Nut wird eine Verdrehung des Kopfteils hinsichtlich des ersten Gehäuseteils unterbunden.

In einer besonderen Ausführungsform umfasst das Gehäuse eine integrierte Kabelführung welche ausgelegt ist, elektrischen Strom und Signale bis zum Stempel zu führen. In einer besonderen Ausführungsform umfasst die Vorrichtung eine integrierte Kabelführung, insbesondere als Federspirale innerhalb des Gehäuses ausgestaltet. Diese Federspirale kann ausgelegt sein, den Hub des Kopfteils zu kompensieren, ohne dass dadurch Kräfte auf die Kabelführung einwirken.

In einer besonderen Ausführungsform umfasst die erfindungsgemässe Vorrichtung mindestens einen Tastsensor zur Detektion eines Verbindungselements. Dieser Tastsensor kann zum Beispiel wie in der WO 2005/007319 A1 ausgestaltet eingesetzt werden. In einer besonderen und alternativen Ausführungsform kann dieser Tastsensor über die Rückkoppelung des Kraftsensors ermöglicht werden. In einer alternativen Ausführungsform umfasst der Tastsensor einen kapazitiven Sensor. Ebenfalls denkbar ist der Einsatz eines Kraftstensors zur Detektion eines Verbindungselements. Durch die Verwendung eines Dehnmessstreifens oder eines Piezo - Sensors kann zusätzlich noch Information bezüglich der angewandten Kräfte gewonnen werden.

In einer besonderen Ausführungsform umfasst die Vorrichtung ein Anschlussteil zur Verbindung der Vorrichtung mit einer Werkzeugmaschine. Dieses Anschlussteil kann mit einer zusätzlichen Dichtung ausgestaltet sein, um ein Eindringen von Schmutz und Staub in das Innere der Vorrichtung zu unterbinden.

Mit der erfindungsgemässen Vorrichtung wird eine Vorrichtung zur Beaufschlagung eines Verbindungselements bereitgestellt, welches vielseitig einsetzbar ist und eine einfache Integration in bestehende Werkzeugmaschinen ermöglicht, bei gleichzeitig geringeren Wartungsaufwänden und einer hohen Arbeitsdynamik. Für einen Fachmann versteht es sich von selbst, dass sämtliche beschriebene Ausführungsformen in einer erfindungsgemässen Ausgestaltung einer Vorrichtung verwirklicht sein können, sofern sich diese nicht gegenseitig ausschliessen.

In einer besonderen Ausführungsform ist der Stempel austauschbar ausgestaltet. Der Stempel kann ein definiertes Stempelprofil umfassen, welches an die zu erzielende Form des Verbindungselements angepasst ist. Das Stempelprofil kann eine Form ausgewählt aus den Formen bestehend aus: flach, kegelig, flach bombiert, gebördelt, umgelegt, ausgeweitet, zylindrisch, hochbombiert, eingebördelt und/oder eingezogen umfassen.

In einer besonderen Ausführungsform ist der erste Antrieb ausgestaltet, dass er einen Gesamthub von zwischen 0 und 500 mm bereitzustellen vermag und einen Arbeitshub von zwischen 0.01 und 100 mm bereitzustellen vermag.

In einer besonderen Ausführungsform umfasst die Vorrichtung mindestens eine Überlastsicherung, um eine Krafteinwirkung in einer bestimmten Achse zu begrenzen. Bevorzugt ist eine Überlastsicherung zwischen einem Gehäuseteil und dem ersten Antrieb angeordnet, sodass eine Krafteinwirkung auf den Antrieb zum Gehäuseteil hin begrenzt wird. Bevorzugt ist eine solche Überlastsicherung als elastisch verformbares Element, insbesondere als Feder ausgestaltet, welche gegen die auftretende Kraft eine Rückstellkraft ausübt. In einer weiteren besonderen Ausführungsform umfasst die erfindungsgemässe Vorrichtung eine Mehrzahl an Überlastsicherungen, insbesondere umfasst sie eine erste Überlastsicherung und eine zweite Überlastsicherung, welche zwischen dem ersten Antrieb und mindestens einem Gehäuseteil angeordnet sind, sodass eine unvorhergesehen auf den Antrieb oder das Gehäuseteil wirkende Kraft durch die Überlastsicherungen in einem bestimmten Bereich begrenzt wird.

In einer weiteren besonderen Ausführungsform umfasst die erfindungsgemässe Vorrichtung eine manuelle Drehvorrichtung zur Bewegung des Antriebs im stromlosen Zustand. Bevorzugt ist die manuelle Drehvorrichtung so angebracht, dass sie von ausserhalb des Gehäuses betätigt werden kann. Dies kann dadurch bewerkstelligt werden, dass die manuelle Drehvorrichtung sich über eine Welle von ausserhalb des Gehäuses in den Gehäuseinnenraum erstreckt und mit dem Antrieb wirkverbunden ist. Dadurch kann im stromlosen Zustand Antrieb, Spindel des ersten Antriebs und Kopfteil bewegt werden. Dies kann besonders für die Wartung hilfreich sein. In einer weiteren bevorzugten Ausführungsform umfasst die manuelle Drehvorrichtung einen Griffbereich an ihrem proximalen Ende, welche eine optimale Kraftübertragung in den Innenraum des Gehäuses und auf den Antrieb ermöglicht. Besonders bevorzugt ist der Griffbereich der manuellen Drehvorrichtung ringförmig ausgestaltet, sodass der Griffbereich zusätzlich als Ankerpunkt für eine Lasthebevorrichtung dienen kann, was den Transport der erfindungsgemässen Vorrichtung vereinfacht. Durch die Einfachheit dieses Griffbereichs kann auch auf spezielles Werkzeug zur manuellen Handhabung der Vorrichtung verzichtet werden. Die Mittel und Wege, um die Vorrichtung, im speziellen das Kopteil, zu bewegen können von Aussen durch die manuelle Drehvorrichtung am Antrieb ausgeführt werden, was weiter die Wartung und Instandhaltung der Vorrichtung begünstigt.

Ein weiterer Aspekt der vorliegenden Erfindung betrifft die Verwendung einer Vorrichtung wie eingangs geschildert, als elektrische Nietmaschine zur Beaufschlagung und Verformung von Verbindungselementen zu Verbindungen. Besonders bevorzugt umfasst diese Verwendung eine Verwendung der Vorrichtung als Taumel-/Radialnietmaschine. Dabei ist der Rotationsantrieb, das heisst der zweite Antrieb so ausgestaltet, dass er eine rosettenförmige Bewegung vollführen kann.

Die erfindungsgemässe Verwendung umfasst die Auswahl der Vorrichtungsbaugrösse hinsichtlich der gewünschten Kräfte. Die Baugrösse wird auch entscheidend vom Durchmesser der zu bearbeitenden Verbindungselemente, respektive Nietschäfte, bestimmt. Es ist im Bereich der Fähigkeiten eines Fachmanns, die geeignete Vorrichtungsgrösse zu ermitteln, um ein gewünschtes Nietergebnis zu erhalten. Die gezeigte Vorrichtung kann verwendet werden für Verbindungselemente Grössen im Bereich von 0,1 bis 200 mm. Besonders bevorzugt ist die Verwendung der vorliegenden Vorrichtung für Nieten, welche erhöhte Ansprüche an die Präzision aufweisen. Die erfindungsgemässe Vorrichtung kann für Nietkräfte von zwischen 0,1 bis 200 KN eingesetzt werden.

Ein Vorteil der vorliegenden Vorrichtung ist, dass die Nietkraft stufenlos steuerbar ist.

In einer besonderen Ausführungsform umfasst die Verwendung die Verwendung als Rolliermaschine.

Ein weiterer Aspekt der vorliegenden Erfindung betrifft ein Verfahren zum Betreiben einer geschilderten Vorrichtung, wobei eine Werkzeugmaschine eingesetzt wird, welche Steuersignale und elektrischen Strom an die Vorrichtung überträgt. Als Werkzeugmaschine kann ein gängiger Arbeitstisch mit entsprechenden elektrischen Anschlüssen und Steuerungsverbindungen geeignet sein. Die Werkzeugmaschinen kann auch Teil einer Fertigungsstrasse oder eines Fertigungsraums sein. Sie kann wahlweise auch Bestandteil eines Reinraums oder eines Sterilraums sein. Die Werkzeugmaschine kann auch weitere Vorrichtungen für ergänzende vorgeschaltete und/oder nachgeschaltete Arbeitsschritte umfassen. In einer besonderen Ausführungsform ist die Werkzeugmaschine ein vollautomatisches Bearbeitungszentrum.

Das erfindungsgemässe Verfahren umfasst zunächst den Schritt des Absenkens des Kopfteils, sodass eine Wirkverbindung mit dem Verbindungselement hergestellt wird. Diese Wirkverbindung kann, muss aber nicht, in einem physischen Kontakt des Kopfteils über den Stempel mit dem Verbindungselement münden. Dieses Absenken des Kopfteils kann das Überwinden eines Hubs, wie oben geschildert umfassen. In einem weiteren Schritt wird der Stempel zur Durchführung einer Kreisbewegung angetrieben. In einem weiteren Schritt wird der Stempel zur Durchführung einer translatorischen Stossbewegung angetrieben. Dieser Schritt kann gleichzeitig zum Durchführen der Kreisbewegung stattfinden und/oder zu dieser getaktet durchgeführt sein.

In einer besonderen Ausführungsform wird mittels eines Tastsensors ein Verbindungselement detektiert und angesichts des detektierten Verbindungselements die Parameter der Beaufschlagung selektiert. Besonders bevorzugt wird die Auswahl der Parameter rückgekoppelt selektiert und angepasst.

Ein weiterer Aspekt der vorliegenden betrifft eine Werkzeugmaschine umfassend eine erfindungsgemässe Vorrichtung. Die Werkzeugmaschine kann Teil einer Fertigungsstrasse oder einer Robotereinheit sein. Zum Anschliessen der erfindungsgemässen Vorrichtung mit der Werkzeugmaschine kann ein Adapter vorgesehen sein in Form einer Befestigungseinheit welche mit der Vorrichtung lösbar verbindbar ist und eine Fixierung an einer Konsole der Werkzeugmaschine gestattet. Die Befestigungseinheit kann auch integraler Bestandteil des Gehäuses der Vorrichtung sein, so z.B. als entsprechende Strukturausbildung am Gehäuse, insbesondere am ersten oder zweiten Gehäuseteil, oder kann durch das Verbinden der beiden Gehäuseteile gebildet werden.

Im Folgenden wird die Erfindung anhand von Figuren und konkreten Ausführungsbeispielen näher erläutert, ohne jedoch im Schutzumfang auf diese eingeschränkt zu sein. In den Figuren werden analoge Bauteile mit dem gleichen Bezugszeichen versehen, sofern nicht explizit etwas anderes gesagt ist.

### Kurze Beschreibung der Zeichnungen

Die zur Erläuterung verwendeten Zeichnungen zeigen schematisch:
- Fig. 1a: eine erfindungsgemässe Vorrichtung in Aussensicht;
- Fig. 1b: die Vorrichtung der Fig. 1a mit ausgefahrenem Hub;
- Fig. 2a: ein Längsquerschnitt durch eine erfindungsgemässe Vorrichtung;
- Fig.2b: der Längsquerschnitt der Fig. 2a mit ausgefahrenem Hub;
- Fig. 3: die Verdrehsicherung der erfindungsgemässen Vorrichtung;
- Fig. 4: ein allgemein schematischer Aufbau des erfindungsgemässen Konzepts;
- Fig. 5: besondere Ausführungsform mit Überlastsicherungen.

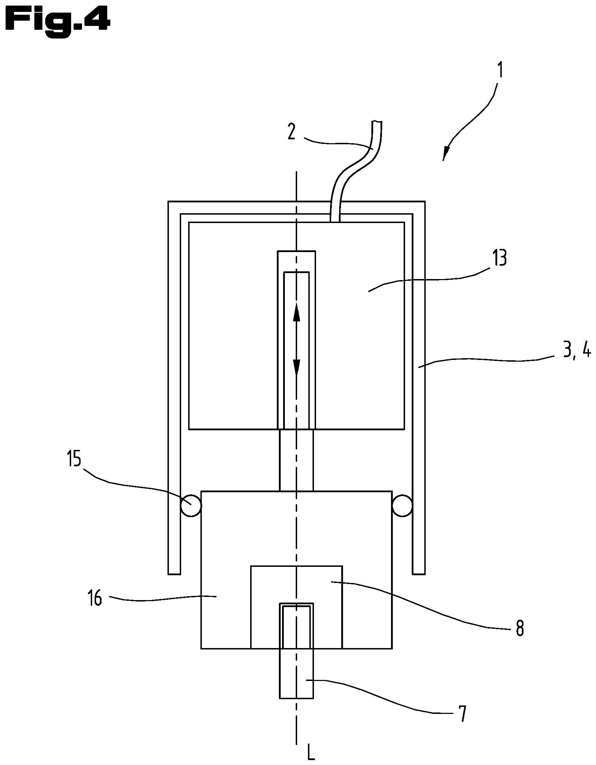

Die Erfindung wird in ihrer einfachsten Ausgestaltung am einfachsten anhand der Fig. 4 illustriert. Die in der Fig. 4 gezeigten erfindungsgemässe Vorrichtung 1 hat die Form eines Zylinders mit einer Längenausdehnung und einer Längsachse L, welche auch im Wesentlichen die zentrale Rotationsachse bildet. Die äussere Struktur wird durch ein Gehäuse 3, 4 gebildet, welches als Hülse ausgestaltet ist. Zweckmässigerweise ist das Gehäuse 3, 4 aus Aluminium. Das Gehäuse 3, 4 weist an seinem proximalen Ende mindestens eine Öffnung auf, durch welche sich ein Anschluss 2 erstreckt, welcher dazu dient, elektrische Signale einer Werkzeugmaschine in das Innere der Vorrichtung 1 zu übertragen. Ausgehend von diesem proximalen Ende ist im Inneren des Gehäuses 3, 4 ein erster Linearantrieb 13 angeordnet, welcher starr im Gehäuse 3, 4 ist. Dieser lineare Antrieb 13 ist ausgestaltet um eine Bewegung entlang der Längsachse eines Kolbens oder einer Spindel zu ermöglichen. Diese aktiviert ein Kopfteil 16, welches in einem vollständig eingefahrenen Zustand des Hubs des linearen Antriebs 13 nahezu vollständig von der Hülse des Gehäuses 3, 4 umhüllt ist. Das Kopfteil 16 ist bezüglich des Gehäuses 3, 4 in Translation zur Längsachse L bewegbar über ein Lager 15 gelagert. Vorzugsweise ist das Kopfteil 16 aber rotationsstarr, das heisst starr hinsichtlich einer Rotation um die Längsachse L. Innerhalb des Kopfteils 16 ist ein zweiter Antrieb 8, welcher als Rotationsantrieb ausgestaltet ist, angeordnet. Dieser zweite Antrieb 8 aktiviert einen Verbindungsstift 8.4, welches um die Längsachse eine kreisförmige Bewegung zu vollführen vermag. An diesen Verbindungsstift 8.4 ist ein Berbeitungskopf 7 wirkverbunden anschließbar zur Bearbeitung des Verbindungselements.

In dieser Ausführungsform sind sowohl der erste Antrieb 13, als auch der zweite Antrieb 8 ohne pneumatische, oder hydraulische Antriebe ausgestaltet. Zudem sind die beiden Antriebe 8, 13 koaxial zur Längsachse L der Vorrichtung 1 angeordnet.

Mit dieser einfachen Anordnung ist eine Vorrichtung 1 zur Beaufschlagung eines Verbindungselements mittels des Stempels bereitgestellt, welche kompakt ist und einen Einsatz in einem Raum mit erhöhten Reinheitsanforderungen ermöglicht.

Der Bearbeitungskopf kann als Stempel ausgestaltet sein. Der Stempel ist dann vorzugsweise aus einem Material, welches härter ist als das zu bearbeitende Verbindungselement, z.b. aus gehärtetem Werkzeugstahl. Bewährt hat sich ein Stempel aus Stahl. Je nach Anwendungsgebiet kann dieser Stempel noch mit zusätzlichen Beschichtungen versehen sein, welche die Abrasionsresistenz und den Verschleisswiderstand verbessern. Gängigerweise sind Diamantverbindungen und Keramiken für solche Zwecke besonders geeignet.

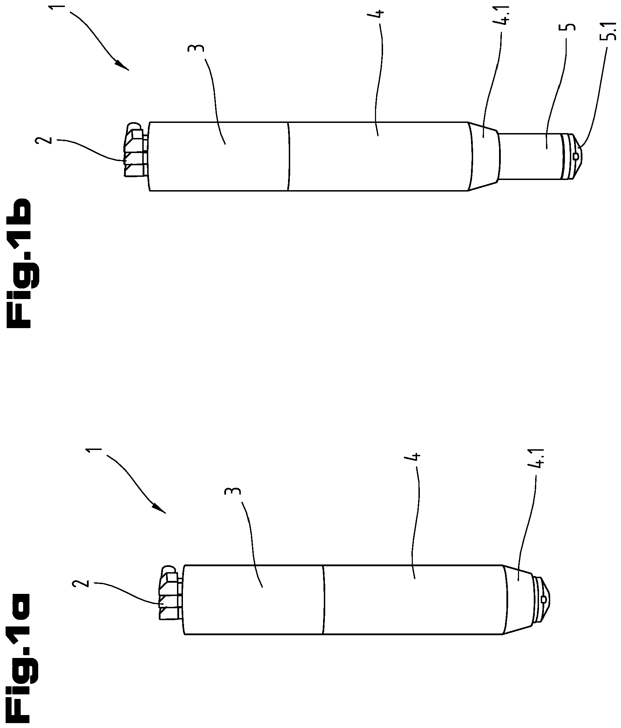

Die kompakte Bauweise wird weiter in der Fig. 1a, 1b deutlich. Diese zeigen eine erfindungsgemässe Vorrichtung 1 in einem eingefahrenen Zustand (Fig. 1a) und einem Zustand mit voll ausgefahrenem Hub (Fig. 1b). In dieser konkreteren Ausführungsform ist das Gehäuse 3, 4 zweiteilig ausgestaltet. Ein erstes hülsenförmiges Gehäuseteil 3 verfügt über die Ausnehmungen, durch welche sich die Anschlüsse 2 für die Strom- und Signalzufuhr erstrecken. An dieses erste Gehäuseteil 3 ist, zum Beispiel über einen Bajonett-Verschluss, ein zweites Gehäuseteil 4 angebracht, welches in eine Mündung 4.1 mündet. In einer Ausführungsform ist das zweite Gehäuseteil 4 mit dem ersten 3 verschraubt.

Aus der Fig. 1b mit vollständig ausgefahrenem Hub ist auch das Kopfteilgehäuse 5 und die Kopfteilmündung 5.1 ersichtlich. Innerhalb dieser Kopfteilmündung 5.1 ist der Bearbeitungskopf, z.Bsp ein Stempel (nicht gezeigt), angebracht, welcher das Verbindungselement beaufschlagt. Im Betrieb wird diese Kopfteilmündung 5.1 über das zu bearbeitende Verbindungselement gestülpt. In einer besonderen Ausführungsform (nicht gezeigt) kann diese Mündung zusätzlich mit Sensorelementen ausgestaltet sein, welche die Ausdehnung des Verbindungselements im unbeaufschlagten, respektive im beaufschlagten Zustand detektiert. Zum Beispiel kann diese Mündung mit einem kapazitativen Sensor oder einem Hallsensor ausgestaltet sein. Die Vorrichtung kann aber auch einfach mit einem Kraftsensor ausgestattet sein.

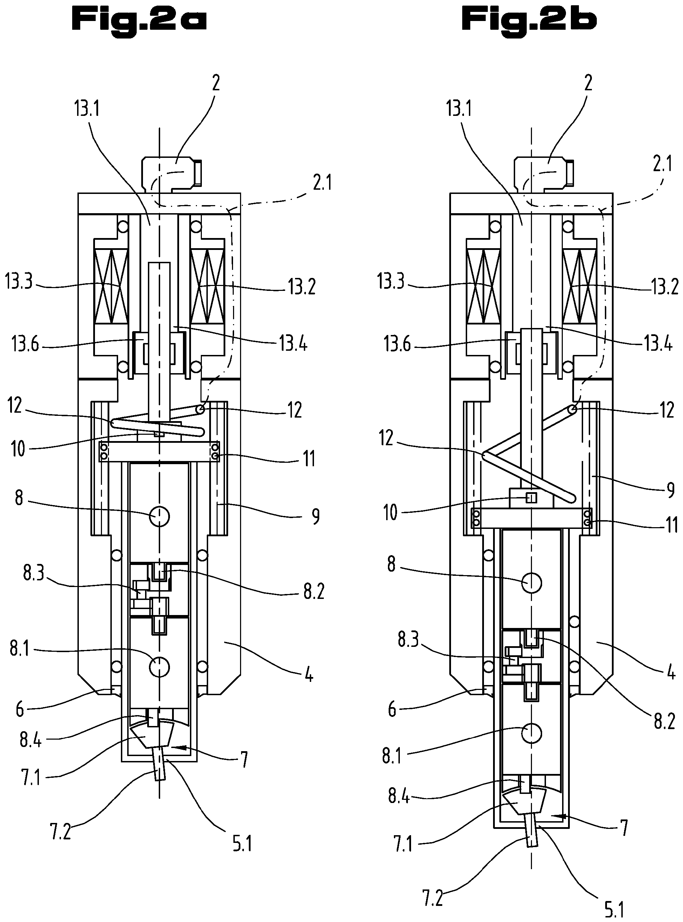

Das Innenleben der in den Fig. 1a und 1b gezeigten Vorrichtungen 1 ist in den Fig. 2a, 2b jeweils im eingefahrenen (Fig. 2a) und ausgefahrenen Zustand (Fig. 2b). Die beiden Gehäuseteil 3, 4 sind hülsenförmig ausgestaltet und miteinander verbunden. Das erste Gehäuseteil verfügt am distalen Ende über eine Ausnehmung, durch welche die Anschlüsse 2 geführt sind, welche im Inneren in eine Kabelführung 2.1 münden, zur elektrischen Zufuhr der Antriebe und Sensoren der Vorrichtungen 1. Der Anschluss 2 ist im vorliegenden Beispiel ummantelt, um den Bedingungen einer Werkzeugmaschine besser Stand zu halten. Auch kann der Anschluss 2 bezüglich erforderlicher Normen angepasst sein, um in einem entsprechenden Roboter aufgenommen zu werden. Der erste Antrieb 13 ist im vorliegenden Beispiel ein Hohlwellenantrieb. Innerhalb des Hohlschaftes 13.1 ist eine Spindel 13.4 angeordnet, um welche sich eine Anordnung aus einem Rotor 13.3 und ein Stator 13.2 anordnen, welche eine Hohlwelle 13.5 umschliessen. Die Spindel ist über eine Gewindemutter 13.6 geführt und mündet direkt in einen Drucksensor 10, welcher wiederum wirkverbunden ist mit dem Kopfteilgehäuse 5. Die Rotationsantriebswelle 8.2 ist durch ein Rotationsgetriebe 8.1 mit dem Bearbeitungskopf 7 wirkverbunden. Im vorliegenden Beispiel ist der Bearbeitungskopf 7 als Nietmaschinenstempel ausgestaltet und umfasst im Wesentlichen einen Stempel 7.2 und einen Kopfteilschaft 7.1. Der Stempel ist so angetrieben, dass er eine kreisförmige Bewegung um die Längsachse L mittels des Rotationsgetriebes 8.1 zu vollführen vermag. Dies ist in dieser Darstellung durch den Verbindungsstift für den Bearbeitungskopf 8.4 gewährleistet, welcher versetzt dargestellt ist bezüglich der Längsachse dargestellt und um diese rotierbar ist. Die Rotationsantriebswelle 8.2 und die Spindel des ersten Antriebs 13.4 sind koaxial angeordnet entlang der Längsachse des Werkzeugs. Eine Kopfteilmündung 5.1 schützt den Bearbeitungskopf 7 und erleichtert die Führung der Vorrichtung zum Verbindungselement, welches zu bearbeiten ist. Zwischen dem Kopfteil 5 und der den Kopfteil umgebenden zweiten Gehäusehälfte 4 ist eine Dichtungslippe 6 angebracht. Die Führung der elektrischen Leitungen ist komplett innerhalb der Gehäuse 3, 4 untergebracht. Um die entsprechende Translation des Kopfteils zu akkommodieren, ist die Kabelführung als Kabelführung-Federspirale 12 ausgestaltet. Um zu verhindern, dass eine Rotation durch den zweiten Antrieb 8 innerhalb des Gehäuses 3, 4 auf den ersten Antrieb 13 übertragen wird, sind Stangen 9 in Stangenschäften angeordnet, welche in einem Verdrehschutz mit Spurlager 11 rotationsstarr bezüglich der Längsachse der Vorrichtung 1 gelagert sind.

Der Bearbeitungskopf 7 muss nicht zweiteilig ausgestaltet sein. Im vorliegenden Fall ist ein Kopfteilschaft 7.1 zur Aufnahme eines Verbindungsstiftes des Bearbeitungskopfes 8.4 mit einer Buchse ausgestaltet.

In den Fig.2a, 2b ist zusätzlich eine Übersetzung 8.3 zwischen dem Rotationsantrieb 8 und dem Rotationsgetriebe 8.1 angeordnet. Diese Übersetzung kann eingesetzt werden um die Drehzahl des Rotationsantriebs zu reduzieren, z.Bsp. dann wenn der Bearbeitungskopf 7 ein Rollierkopf ist (nicht gezeigt). Diese Übersetzung ist fakultativ und für die Anordnung mit einem Stempel 7.2 als Bearbeitungskopf 7 nicht erforderlich.

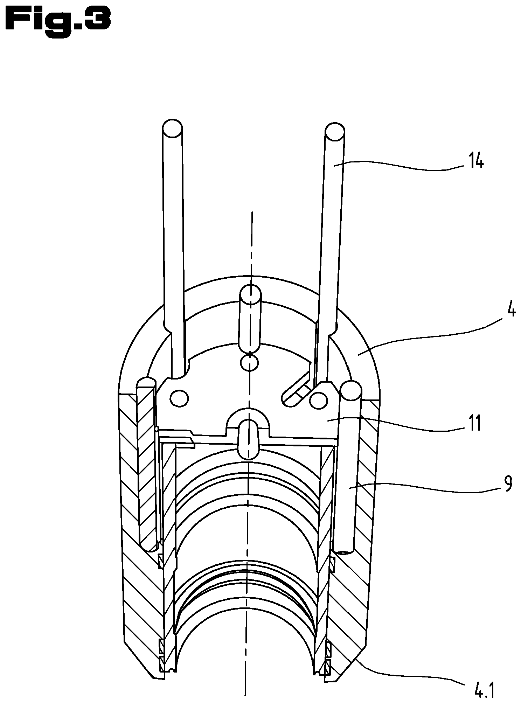

Die Ausgestaltung des Rotationsschutzes ist nochmals näher anhand der Fig. 3 erläutert, welche schematisch perspektivisch das zweite Gehäuseteil 4 darstellt, mit der Mündung 4.1 (unten). Die Stangen 9 erstrecken sich über einen wesentlichen Teil des zweiten Gehäuseteils 4, welcher mit einem zusätzlichen Verdrehschutz mit Spurlager 11 ausgestaltet ist, welcher rotationsstarr im zweiten Gehäuseteil 4 untergebracht ist. Die Schrauben 14 des Kopfteils erstrecken sich über die gesamte Verbindungsstelle zwischen dem zweiten Gehäuseteil 4 und dem ersten Gehäuseteil (in dieser Darstellung nicht gezeigt) und verbinden diese rotationsstarr.

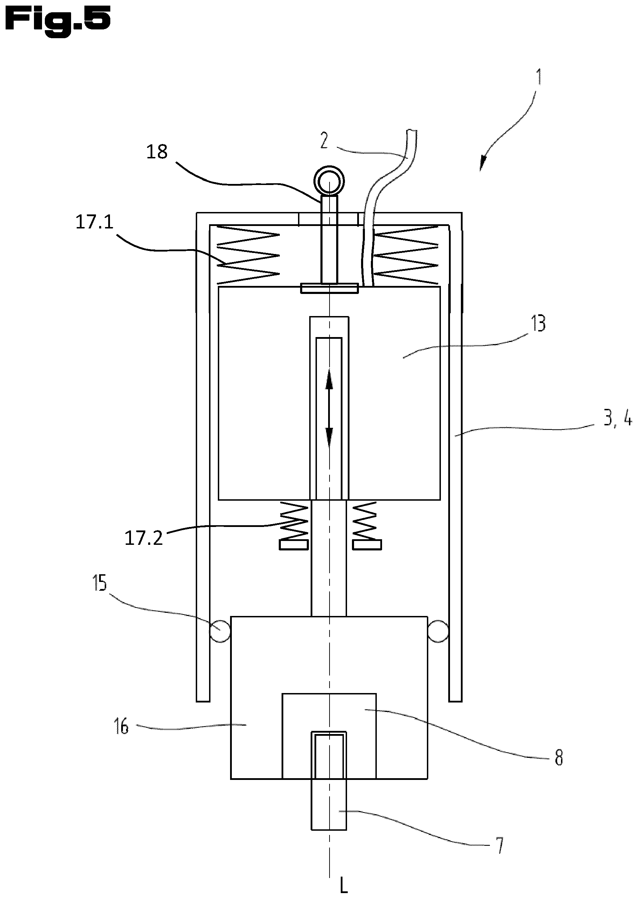

In der Figur 5 wird eine erfindungsgemässe Vorrichtung 1 analog zu der aus der Figur 4 illustriert, welche aber zusätzliche vorteilhafte Ausgestaltungen aufweist. Das Aluminiumgehäuse 3.4 weist an seinem proximalen Ende entlang der zentralen Rotationsachse L der Vorrichtung 1 eine Öffnung auf, durch welche eine manuelle Drehvorrichtung 18 direkt auf die Welle und den ersten Linearantrieb 13 eine manuelle Drehkraft gewirkt werden kann.

Weiter umfasst diese Vorrichtung 1 Überlastsicherungen 17.1, 17.2, welche zwischen dem Gehäuse 3.4 und dem ersten Antrieb 13 angeordnet sind. Eine erste Überlastsicherung ist am proximalen Ende des Gehäuses 3.4 in der Form einer Federanordnung 17.1 ausgebildet, welche allfällige Kräfte, die auf den ersten Antrieb 13 einwirken in Hinblick auf dessen translatorische Bewegung zum proximalen Ende des Gehäuses 3.4 begrenzen. Eine zweite Überlastsicherung in dergestalt einer zweiten Federanordnung 17.2 ist, über an der Innenseite des Gehäuses 3.4 ausgebildete Laschen (welche integraler Bestandteil des Gehäuses 3.4 sein können), ebenfalls mit dem Antrieb 13 dergestalt wirkverbunden, dass eine translatorische Kraft, die auf den Antrieb 13 wirkt von dieser Federanordnung 17.2 ebenfalls begrenzt wird. Durch die beiden Überlastsicherungen 17.1, 17.2 ist der Linearantrieb 13 von Kräften geschützt, was die Robustheit der Vorrichtung erhöht. Diese Ausführungsform ist allerdings rein fakultativ und als Ergänzung zur erfindungsgemässen Vorrichtung 1 vorgesehen.

Es versteht sich von selbst, dass das gezeigte Beispiel lediglich eine Ausführungsform der erfindungsgemässen Lösung darstellt. Sofern sich die einzelnen besonderen Ausführungsformen nicht gegenseitig einschliessen, so sind diese in einer erfindungsgemässen Vorrichtungen beliebig kombinierbar, ohne dass dabei die Vorteile der vorliegenden Erfindung eingeschränkt sind.

### Bezugszeichenliste

- 1: Vorrichtung
- 2: Anschluss
- 2.1: Kabelführung
- 3: erstes Gehäusteil
- 4: zweites Gehäusteil
- 4.1: Mündung
- 5: Kopfteilgehäuse
- 5.1: Kopfteilmündung
- 6: Dichtungslippe
- 7: Bearbeitungskopf
- 7.1: Kopfteilschaft
- 7.2: Stempel
- 8: Rotationsantrieb
- 8.1: Rotationsgetriebe
- 8.2: Rotationsanstriebs-Welle
- 8.3: Übersetzung
- 8.4: Verbindungsstift für Bearbeitungskopf
- 9: Stange
- 10: Drucksensor
- 11: Verdrehschutz mit Spurlager
- 12: Kabelführung-Federspirale
- 13: erster Antrieb
- 13.1: Hohlschaft
- 13.2: Stator des ersten Antriebs
- 13.3: Rotor des ersten Antriebs
- 13.4: Spindel des ersten Antriebs
- 13.6: Gewindemutter
- 14: Verbindungssschrauben
- 15: Lager Kopfteil
- 16: Kopfteil
- 17.1: Überlastsicherung abwärts
- 17.2: Überlastsicherung aufwärts
- 18: Manuelle Hebe- und Drehvorrichtung

## Patentansprüche

1. Vorrichtung (1) zur Beaufschlagung eines Verbindungselements mit einer Beaufschlagungskraft, dergestalt, dass das Verbindungselement durch die Beaufschlagung plastisch verformt wird, umfassend:
a. Ein bewegbar gelagertes Kopfteil (16) mit einem Bearbeitungskopf (7), insbesondere ausgestaltet als Stempel oder Wälzelement zur rollierenden Umformung, wobei der Bearbeitungskopf (7) ausgelegt ist das Verbindungselement zu kontaktieren;
b. Ein erster Antrieb (13), ausgelegt eine Translation des Kopfteils (16) in der Längsachse des Kopfteils (16) anzutreiben, insbesondere so anzutreiben, dass die Beaufschlagungskraft vom Bearbeitungskopf (7) auf das Verbindungelement beaufschlagt wird;
c. Ein zweiter Antrieb (8), ausgelegt eine Rotation des Bearbeitungskopfes (7) um die Längsachse anzutreiben, insbesondere so anzutreiben, dass der Stempel mindestens eine geschlossene Kurve zu beschreiben vermag;
d. Ein Gehäuse zur Aufnahme des ersten Antriebs (13), des zweiten Antriebs und des Kopfteils (16), und
**dadurch gekennzeichnet, dass**
der erste Antrieb (13) und der zweite Antrieb (8) elektrisch angetrieben sind und koaxial angeordnet sind, und
wobei der zweite Antrieb (8) im Kopfteil (16) angeordnet ist.

2. Vorrichtung (1) gemäss Anspruch 1, wobei der erste Antrieb (13) einen Hohlwellenmotor umfasst, insbesondere weiter ein Gewindetrieb umfasst ausgewählt aus der Gruppe bestehend aus: Rollentrieb, Kugeltrieb, oder Planetengewindetrieb.

3. Vorrichtung (1) gemäss Anspruch 2, wobei der erste Antrieb (13) eine Gewindespindel umfasst, welche eine Spindelsteigung von 5 mm oder weniger aufweist.

4. Vorrichtung (1) gemäss einem der Ansprüche 1 bis 3, wobei der zweite Antrieb (8) einen permanenterregten Synchronmotor umfasst.

5. Vorrichtung (1) gemäss einem der Ansprüche 1 bis 4, wobei die Vorrichtung (1) einen Kraftsensor (10) umfasst, welcher die Beaufschlagungskraft misst und dem ersten Antrieb (13) nachgeschaltet ist, insbesondere wobei der Kraftsensor (10) dem zweiten Antrieb (8) vorgeschaltet ist.

6. Vorrichtung (1) gemäss einem der Ansprüche 1 bis 5, wobei das Gehäuse eine Führung für eine translatorische Bewegung des Kopfteils beinhaltet, und insbesondere wobei das Gehäuse eine Verdrehsicherung bezüglich des Kopfteils beinhaltet, so dass eine translatorische Bewegung des Kopfteils innerhalb des Gehäuses geführt ist, eine Rotation des Kopfteils aber unterbunden ist.

7. Vorrichtung (1) gemäss Anspruch 6, wobei die Verdrehsicherung und/oder die Führung durch mindestens eine sich in längsrichtung durch das Gehäuse erstreckende Stange (9) und mindestens ein Spurlager zur Lagerung der Verdrehsicherung und/oder Führung.

8. Vorrichtung (1) gemäss einem der Ansprüche 1 bis 7, umfassend eine im Gehäuse integrierte Kabelführung (12), insbesondere in einer Federspirale innerhalb des Gehäuses integrierte Kabelführung (12) zur Leitung elektrischer Signale zwischen dem Kopfteil (16) und einem Anschluss (2).

9. Vorrichtung (1) gemäss einem der Ansprüche 1 bis 8, wobei das Gehäuse mehrteilig ausgestaltet ist, insbesondere wobei das Gehäuse ein erstes Gehäuseteil (3) und ein zweites Gehäuseteil (4) umfasst, und wobei die Gehäuseteile (3, 4) miteinander lösbar verbindbar ausgestaltet sind, so dass ein zweites Gehäuseteil (4) welches den zweiten Antrieb (8) und den Kopfteil (16) beherbergt ausgetauscht werden kann.

10. Vorrichtung (1) gemäss einem der Ansprüche 1 bis 9, weiter umfassend mindesten einen Sensor zur Detektion eines Verbindungselements.

11. Verwendung einer Vorrichtung (1) gemäss einem der Ansprüche 1 bis 10, als elektrische Nietmaschine zur umformenden Beaufschlagung und Verformung von Verbindungselementen zu Nietverbindungen, insbesondere zur taumelnden und/oder radialen Beaufschlagung und Verformung von Verbindungselementen zu Nietverbindungen.

12. Verfahren zum Betreiben einer Vorrichtung (1) gemäss einem der Ansprüche 1 bis 11, wobei eine Werkzeugmaschine Steuersignale und elektrischen Strom an die Vorrichtung überträgt, umfassend die Schritte:
a. Absenken des Kopfteils in Wirkverbindung mit einem Verbindungselement;
b. Antreiben eines Bearbeitungskopfes zur Durchführung einer Kreisbewegung;
c. Antreiben des Bearbeitung Kopfes zur Durchführung einer translatorischen Beaufschlagungsbewegung, insbesondere eines Arbeitshubes.

13. Verfahren gemäss Anspruch 12, wobei mittels eines Tastsensors ein Verbindungselement detektiert wird, und angesichts des detektierten Verbindungselements die Paramater der Beaufschlagung selektiert werden, insbesondere rückgekoppelt selektiert und angepasst werden.

14. Werkzeugmaschine umfassend eine Vorrichtung (1) gemäss einem der Ansprüche 1 bis 10 und eine lösbar mit der Vorrichtung verbindbare Befestigungseinheit zur Fixierung der Vorrichtung in einer Werkzeugmaschine.

## Claims

1. A device (1) for acting upon a connecting element with an applied force, such that the connecting element undergoes plastic deformation due to the application of force, comprising:
a. a movably mounted head part (16) having a processing head (7), in particular designed as a ram or a rolling element for rolling deformation, wherein the processing head (7) is designed to contact the connecting element;
b. a first drive (13) designed to drive translation of the head part (16) in the longitudinal axis of the head part (16), in particular to drive it so that the applied force is applied to the connecting element by the processing head (7);
c. a second drive (8) designed to drive a rotation of the processing head (7) about the longitudinal axis, in particular to drive it so that the ram is at least capable of describing a closed curve;
d. a housing for accommodating the first drive (13), the second drive and the head part (16) and
**characterized in that**
the first drive (13) and the second drive (8) are driven electrically and are arranged coaxially, and
wherein the second drive (8) is situated in the head part (16).

2. The device (1) according to claim 1, wherein the first drive (13) comprises a hollow shaft motor, in particular additionally comprising a screw drive selected from the group consisting of: a roller drive, a ball drive or a planetary screw drive.

3. The device (1) according to claim 2, wherein the first drive (13) comprises a threaded spindle having a spindle pitch of 5 mm or less.

4. The device (1) according to any one of claims 1 to 3, wherein the second drive (8) comprises a permanently energized synchronous motor.

5. The device (1) according to any one of claims 1 to 4, wherein the device (1) comprises a force sensor (10), which measures the applied force and is connected downstream from the first drive (13), in particular wherein the force sensor (10) is connected upstream from the second drive (8).

6. The device (1) according to any one of claims 1 to 5, wherein the housing includes a guide for a translational movement of the head part, and in particular wherein the housing includes a twist-preventing device with respect to the head part, so that a translational movement of the head part inside the housing is guided, but rotation of the head part is suppressed.

7. The device (1) according to claim 6, wherein the twist-preventing device and/or the guide by at least one rod (9) extending through the housing in the longitudinal direction and at least one thrust bearing for supporting the twist-proof device and/or guide.

8. The device (1) according to any one of claims 1 to 7, comprising a cable guide (12) integrated into the housing, in particular a cable guide (12) integrated into a spiral spring inside the housing for conducting electric signals between the head part (16) and a connector (2).

9. The device (1) according to any one of claims 1 to 8, wherein the housing is designed in multiple parts, in particular wherein the housing comprises a first housing part (3) and a second housing part (4), and wherein the housing parts (3, 4) are designed to be releasably connected to one another, so that a second housing part (4), which can be replaced and contains the second drive (8) and the head part (16).

10. The device (1) according to any one of claims 1 to 9, additionally comprising at least one sensor for detecting a connecting element.

11. A use of a device (1) according to any one of claims 1 to 10 as an electrical riveting machine for forming action and shaping or molding of connecting elements to form rivet connections, in particular for tumbling and/or radial action and shaping of connecting elements to form rivet connections.

12. A method for operating a device (1) according to any one of claims 1 to 11, wherein a machine tool transmits control signals and electric current to the device, comprising the steps:
a. lowering the head part in active connection to a connecting element;
b. driving a machining head for executing a circular movement;
c. driving the processing head to execute a translational acting movement, in particular a working stroke.

13. The method according to claim 12, wherein a connecting element is detected by means of a sensor, and the parameters of the action are selected on the basis of the connecting element detected, in particular being selected and adjusted through feedback.

14. A machine tool, comprising a device (1) according to any one of claims 1 to 10 and a fastening unit that can be connected to the device for securing the device in a machine tool.

## Revendications

1. Dispositif (1) d'application d'une force sur un élément de liaison de telle sorte que l'élément de liaison soit déformé plastiquement par l'application de la force, le dispositif comprenant :
a. une partie de tête (16) montée de manière mobile et pourvue d'une tête de traitement (7), conformée en particulier comme un poinçon ou élément de roulement destiné au formage par roulement, la tête de traitement (7) étant conçue pour venir en contact avec l'élément de liaison ;
b. un premier entraînement (13), conçu pour entraîner en translation la partie de tête (16) suivant l'axe longitudinal de la partie de tête (16), notamment pour l'entraîner de telle sorte que la force d'application soit exercée par la tête de traitement (7) sur l'élément de liaison ;
c. un deuxième entraînement (8), conçu pour entraîner en rotation la tête de traitement (7) sur l'axe longitudinal, notamment pour l'entraîner de telle sorte que le poinçon puisse décrire au moins une courbe fermée ;
d. un boîtier destiné à recevoir le premier entraînement (13), le deuxième entraînement et la partie de tête (16), et
**caractérisé en ce que**
le premier entraînement (13) et le deuxième entraînement (8) sont entraînés électriquement et disposés coaxialement, et
le deuxième entraînement (8) étant disposé dans la partie de tête (16).

2. Dispositif (1) selon la revendication 1, le premier entraînement (13) comprenant un moteur à arbre creux, en particulier comprenant en outre un entraînement par vis choisi dans le groupe comportant : l'entraînement à rouleaux, l'entraînement à billes ou l'entraînement à vis planétaire.

3. Dispositif (1) selon la revendication 2, le premier entraînement (13) comprenant une broche filetée qui a un pas de broche de 5 mm ou moins.

4. Dispositif (1) selon l'une des revendications 1 à 3, le deuxième entraînement (8) comprenant un moteur synchrone à excitation permanente.

5. Dispositif (1) selon l'une des revendications 1 à 4, le dispositif (1) comprenant un capteur de force (10) qui mesure la force d'application et qui est monté en aval du premier entraînement (13), en particulier le capteur de force (10) étant monté en amont du deuxième entraînement (8).

6. Dispositif (1) selon l'une des revendications 1 à 5, le boîtier comprenant un dispositif de guidage destiné à déplacer en translation la partie de tête, et en particulier le boîtier contenant un dispositif anti-rotation par rapport à la partie de tête de manière à guider un mouvement en translation de la partie de tête à l'intérieur du boîtier tout en empêchant la rotation de la partie de tête.

7. Dispositif (1) selon la revendication 6, le dispositif anti-rotation et/ou le dispositif de guidage par au moins une barre (9) s'étendant dans la direction longitudinale à travers le boîtier et au moins un palier de roulement pour le montage du dispositif anti-rotation et/ou du dispositif de guidage.

8. Dispositif (1) selon l'une des revendications 1 à 7, comprenant un guide-câble (12) intégré dans le boîtier, notamment un guide-câble (12) intégré dans une spirale à ressort à l'intérieur du boîtier et destiné à conduire des signaux électriques entre la partie de tête (16) et une borne (2) .

9. Dispositif (1) selon l'une des revendications 1 à 8, le boîtier étant conçu en plusieurs parties, en particulier le boîtier comprenant une première partie de boîtier (3) et une deuxième partie de boîtier (4), et les parties de boîtier (3, 4) étant conçues pour pouvoir être reliées de manière amovible l'une à l'autre de manière à pouvoir remplacer une deuxième partie de boîtier (4) qui abrite le deuxième entraînement (8) et la partie de tête (16).

10. Dispositif (1) selon l'une des revendications 1 à 9, comprenant en outre au moins un capteur destiné à détecter un élément de liaison.

11. Utilisation d'un dispositif (1) selon l'une des revendications 1 à 10, comme riveteuse électrique pour mettre en forme et déformer des éléments de liaison pour former des liaisons à riveter, en particulier pour le culbutage et/ou la sollicitation radiale et la déformation d'éléments de liaison pour former des liaisons à riveter.

12. Procédé de fonctionnement d'un dispositif (1) selon l'une des revendications 1 à 11, une machine-outil transmettant des signaux de commande et du courant électrique au dispositif, le procédé comprenant les étapes suivantes :
a. abaisser la partie de tête en liaison fonctionnelle avec un élément de liaison ;
b. entraîner une tête de traitement pour effectuer un mouvement circulaire ;
c. entraîner la tête de traitement pour effectuer un mouvement de sollicitation en translation, notamment une course de travail.

13. Procédé selon la revendication 12, un élément de liaison étant détecté au moyen d'un palpeur et les paramètres de la sollicitation étant sélectionnés, notamment sélectionnés et ajustés par rétroaction, en présence de l'élément de liaison détecté.

14. Machine-outil comprenant un dispositif (1) selon l'une des revendications 1 à 10 et une unité de fixation pouvant être reliée de manière amovible au dispositif pour fixer le dispositif dans une machine-outil.
